# EUROPEAN PATENT APPLICATION

(11) **EP 3 279 910 A1**
(43) Date of publication of application: **07.02.2018**
(21) Application number: 16771716.4
(22) Date of filing: 22.03.2016
(51) Int. Cl.: H01G 11/52, H01G 2/14, H01G 9/02, H01G 11/16, H01G 11/84

(54) **CAPACITOR AND PRODUCTION METHOD THEREFOR**

(30) Priority: 30.03.2015 JP 2015068717
(71) Applicant: Nippon Chemi-Con Corporation, Tokyo 141-8605 (JP)
(72) Inventor: SHIMIZU, Makoto, Tokyo 141-8605 (JP); NAKABAYASHI, Makoto, Tokyo 141-8605 (JP); YAMASAKI, Nobuyuki, Tokyo 141-8605 (JP)
(74) Representative: Addiss, John William
(86) International application number: PCT/JP2016/001634
(87) International publication number: WO 2016/157823

(57) **Abstract**

In a capacitor using a capacitor element having an anode foil and a cathode foil wound with a separator interposed between the anode foil and the cathode foil, the separator includes a low insulation part having a low insulation function between the anode foil and the cathode foil, and the low insulation part may be included within a range of 90 % in a central portion in a height direction of the capacitor element and within a range of 5 to 90 % in a diametrical direction from the center of the capacitor element. As a result, when the capacitor falls into an abnormal state, a damage of a case or a sealing plate can be avoided, and abnormal situations such as the capacitor element protruding out of the case can be avoided.

## Description

### TECHNICAL FIELD

A technique of the present disclosure relates to, for example, a capacitor such as an electrolytic capacitor and an electric double layer capacitor, and a production method therefor.

### BACKGROUND ART

A capacitor such as an electrolytic capacitor and an electric double layer capacitor is not only used alone but also used in a form of parallel connection or series connection of a plurality of capacitors. By enlarging areas of an anode foil and a cathode foil of a capacitor element in this capacitor, the capacitance of the capacitor can be made higher. Additionally, by selecting a connection form of a plurality of capacitors, a higher capacity and a higher withstand voltage can be achieved as compared to a single capacitor.

With regard to an anode foil and a cathode foil of a capacitor, it is known that the anode foil is made wider in width than the cathode foil and that the foils are wound with a separator interposed therebetween (e.g., Patent Document 1). In such a capacitor, even if a burr projecting from the anode foil in the width direction thereof breaks through the separator and reaches the cathode foil side, contact with the cathode foil having a width narrower than the anode foil is avoided and a short circuit can be prevented from occurring between the anode foil and the cathode foil due to the burr.

With regard to a wound form of a capacitor element, a capacitor is known that has a hollow winding part disposed in a winding core part of the capacitor element with the anode foil removed from this hollow winding part (e.g., Patent Document 2) . In such a capacitor, the capacitor element is sealed in a case, so that a pressure of gas filled in the case acts on the capacitor element. Therefore, a buckling force toward a space of the winding core part of the capacitor element is generated by the gas pressure in the vicinity of the winding core part of the capacitor element. The hollow winding part is disposed in the winding core part of the capacitor element to prevent the anode foil from folding due to absorbance of the buckling force and to prevent a short circuit between the anode foil and the cathode foil.

### PRIOR ART DOCUMENTS

### PATENT DOCUMENTS

Patent Document 1: Japanese Unexamined Utility Model Application Publication No. 52-037247
Patent Document 2: Japanese Laid-Open Patent Publication No. 4-361517

### SUMMARY OF THE INVENTION

### PROBLEM TO BE SOLVED BY THE INVENTION

In some cases, an abnormal stress is generated so that an overvoltage Vs etc. exceeding a rated value are applied to a capacitor. For example, if an excessive voltage close to a twofold rated voltage of the capacitor is applied, the anode foil and the cathode foil may be short-circuited due to a leakage current. When a short circuit occurs, a large current flows through the short-circuited position, and a spark is generated by this large current. This spark melts the electrode foils and gasifies electrolyte etc. Although a capacitor including a pressure valve discharges the generated gas through the pressure valve, a rapid rise in internal pressure can cause a rupture etc. of the capacitor. Additionally, when such an abnormal state occurs, a capacitor element with enhanced movement energy may collide with a sealing plate to disrupt the sealing state of the case sealed with the sealing plate and may cause a situation that the capacitor element protrudes out of the case.

Even if the capacitor has no connection abnormality, an abnormality occurring in an electric circuit including the capacitor may make it impossible to avoid a trouble such as the overvoltage Vs being applied to the capacitor. Therefore, higher safety is required for the capacitor. For example, in a capacitor element in which an anode foil and a cathode foil wound together with a separator interposed between the cathode foil and the anode foil set wider in width than the cathode foil, if an occurrence of an abnormal stress causes a spark due to a short circuit between the anode foil and the cathode foil on the bottom side of the case, the capacitor element may collide with the sealing plate due to a large movement energy. This causes a problem that the sealing state of the case is disrupted and that the capacitor element cannot be prevented from protruding outside from the case.

Patent Documents 1 and 2 do not disclose or suggest such a requirement and a problem and do not disclose or suggest a configuration etc. for solving the problem.

In view of the problem, an object of the present invention is to avoid a damage of the case to prevent an abnormal situation such as the capacitor element protruding out of the case when the capacitor falls into an abnormal state.

### MEANS FOR SOLVING PROBLEM

To achieved the object, an aspect of a capacitor of the present disclosure provides a capacitor using a capacitor element having an anode foil and a cathode foil wound with a separator interposed between the anode foil and the cathode foil, the separator includes a low insulation part having a low insulation function between the anode foil and the cathode foil, and the low insulation part may be included within a range of 90 % in a central portion in a height direction of the capacitor element and within a range of 5 to 90 % in a diametrical direction from the center of the capacitor element.

In the capacitor, the separator may have a first separator insulating the anode foil and the cathode foil from each other along a foil longitudinal direction and a second separator including the low insulation part, and the first separator and the second separator may continuously be arranged along the foil longitudinal direction.

In the capacitor, the low insulation part may have the low insulation function due to the separator of which density or basis weight is low.

In the capacitor, the separator may include the low insulation part in which an embossed part, a fluted part, or a cut part is formed.

To achieved the object, an aspect of a production method for a capacitor of the present disclosure comprises the steps of forming an anode foil; forming a cathode foil; forming a low insulation part having a low insulation function in a separator, the low insulation part being between the anode foil and the cathode foil; and stacking the anode foil and the cathode foil via the separator, and forming a capacitor element by winding. The low insulation part may be included within a range of 90 % in a central portion in a height direction of the capacitor element and within a range of 5 to 90 % in a diametrical direction from the center of the capacitor element.

In the production method for a capacitor, the method may include forming a first separator insulating the anode foil and the cathode foil from each other and a second separator including a low insulation part having a low insulation function between the anode foil and the cathode foil, and continuously arranging the first separator and the second separator along a foil longitudinal direction.

### EFFECT OF THE INVENTION

According to the present invention, any of the following effects is acquired
(1) When an overvoltage Vs is applied between the anode foil and the cathode foil and an overcurrent flows through the anode foil and the cathode foil, the current preferentially flows through the low insulation part to cause a short circuit between the anode foil and the cathode foil facing across the low insulation part. Since the short circuit is caused at a desired position in the capacitor element, the impact due to the short circuit is confined in the capacitor element. The damage of the case and the sealing plate can be reduced or avoided.
(2) Abnormalities such as protrusion of the capacitor element from the case can be reduced or avoided.

Other objects, features, and advantages of the present invention will become more apparent by reference to the accompanying drawings and embodiments.

### BRIEF DESCRIPTION OF DRAWINGS

Fig. 1 is a diagram of an example of a capacitor element used for a capacitor according to an embodiment.
Fig. 2 is a diagram of an arrangement position of an embossed part.
Fig. 3 is a diagram of an example of a cross-sectional shape and density of the embossed part.
Fig. 4 is a diagram of an arrangement position of embossed parts of capacitors according to Examples 1 and 2.
Fig. 5 is a diagram of arrangement positions of embossed parts of capacitors according to Examples 3 and 4.
Fig. 6 is a diagram of a production process example of the capacitor element.
Fig. 7 is a diagram of a configuration example of a separator.
Fig. 8 is a diagram of an arrangement position of an embossed part of a capacitor according to Comparative Example 2.
Fig. 9 is a diagram of an arrangement position of an embossed part of a capacitor according to Comparative Example 3.

### MODES FOR CARRYING OUT THE INVENTION

### First Embodiment

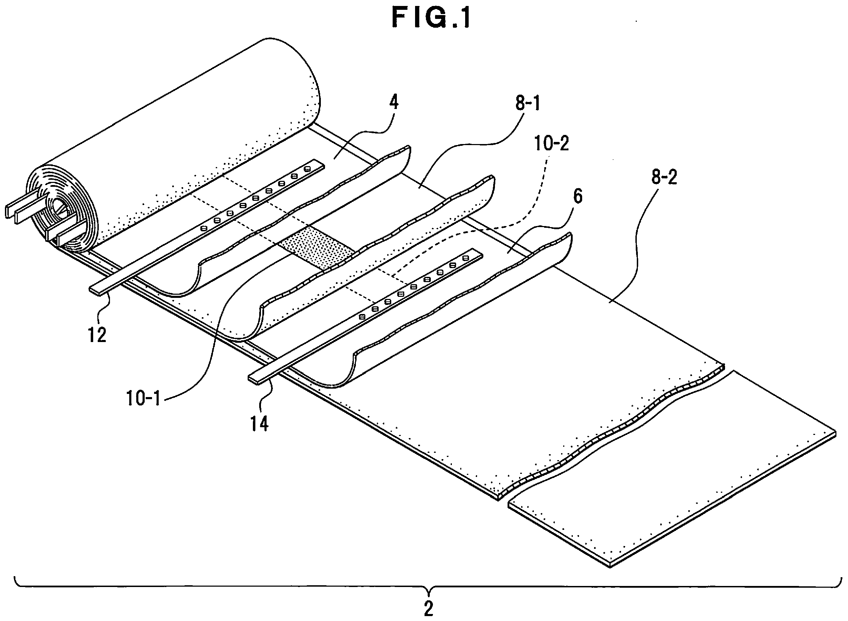

Fig. 1 shows an example of a capacitor element used for a capacitor according to an embodiment. Fig. 1 shows an example of a state, unrolled state, in which the capacitor element is partially opened. The capacitor element 2 is, for example, an element of either an electric double layer capacitor or an electrolytic capacitor. By way of example, this capacitor element 2 includes an anode foil 4, a cathode foil 6, and separators 8-1, 8-2.

For example, an aluminum foil is used for the anode foil 4 and the cathode foil 6, and a dielectric oxide film is formed on the anode foil 4 by a chemical conversion treatment after an etching process.

The separators 8-1, 8-2 are made of, for example, electrolytic paper such as a kraft fiber nonwoven fabric and a hemp fiber nonwoven fabric, and have an insulation function between the anode foil 4 and the cathode foil 6. The separator 8-1 includes an embossed part 10-1, and the separator 8-2 includes an embossed part 10-2. The embossed parts 10-1, 10-2 are an example of a low insulation part of the present disclosure, and embossing is performed on the separators 8-1, 8-2 so that the insulation function of the separators 8-1, 8-2 becomes lower as compared to before the embossing. This low insulation part forms a vulnerable part having a low withstand voltage against an overvoltage Vs. Obviously, even this vulnerable part has withstand voltage characteristics satisfying the withstand voltage performance required for the capacitor. In this embossing, for example, an unevenly-formed roller is pressed against one surface of each of the separators 8-1, 8-2 so that unevenness is formed on the separators 8-1, 8-2 due to a difference in compression.

For example, the capacitor element 2 is a winding element of the laminated anode foil 4, the cathode foil 6, and the separators 8-1, 8-2. The winding element has the anode foil 4 and the cathode foil 6 stacked via the separator 8-1 and the separator 8-2.

An anode lead terminal 12 is connected to the anode foil 4 and a cathode lead terminal 14 is connected to the cathode foil 6. The anode lead terminal 12 and the cathode lead terminal 14 connect the capacitor element 2 to an external circuit such as a power supply circuit.

### Formation Range of Embossing

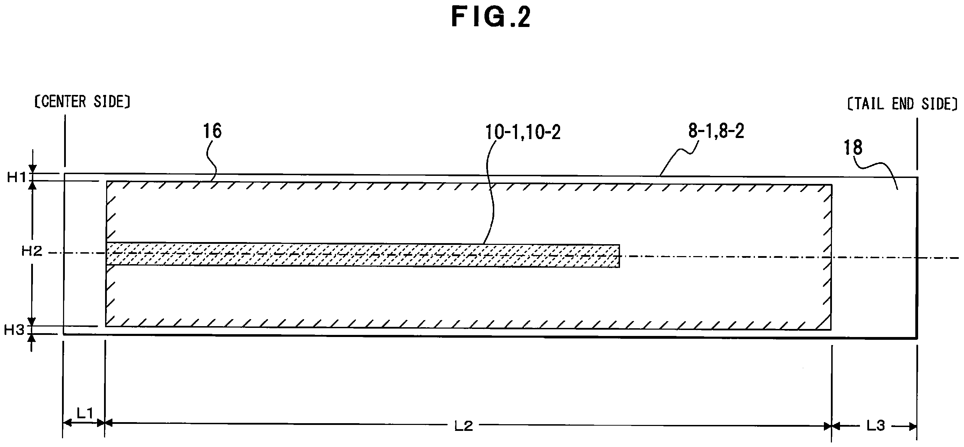

Fig. 2 shows an example of a formation range of the embossed part. Fig. 2 shows an example of the separators 8-1, 8-2 in a unrolled state and it is assumed that a left end is disposed on the center side of the capacitor element 2 while a right end is disposed on the tail end side, i.e., the outer edge side, of the capacitor element 2.

Assuming that flat surface portions of the separators is divided into an inner part 16 and an outer part 18 in the separators 8-1, 8-2 in such a unrolled state, the embossed parts 10-1, 10-2 are included in the inner part 16. The embossed parts 10-1, 10-2 may be arranged in the entire area of the inner part 16 or may be arranged in a portion of the inner part 16.

When H1, H2, and H3 denote the height of the outer part 18 on the upper side, the height of the inner part 16, and the height of the outer part 18 on the lower side, respectively, the ratio of the heights H1, H2, H3 is set to 5:90:5, for example. When L1, L2, and L3 denote the length of the outer part 18 on the center side, the length of the inner part 16, and the length of the outer part 18 on the tail end side, respectively, the ratio of L1, L2, L3 is set to, for example, 5:85:10 in the diametrical direction from the center of the capacitor element 2 in the state of the capacitor element 2, i.e., in the wound state. Therefore, the embossed parts 10-1, 10-2 are arranged within a range of 90 % in a central portion in the height direction of the capacitor element 2 (within a range of 5 to 95 [%] when the upper end is at 0 [%] and the lower end is at 100 [%]), and within a range of 5 to 90 % in the diametrical direction from the center of the capacitor element 2 (within a range of 5 to 90 [%] when the center is at 0 [%] and the tail end is at 100 [%]). The arrangement ranges of the embossed parts 10-1, 10-2 may be determined depending on specifications of a capacitor and, for example, a large capacitor having an increased scale of impact may have the outer part 18 enlarged and the inner part 16 reduced, while a small capacitor may have the outer part 18 reduced and the inner part 16 enlarged.

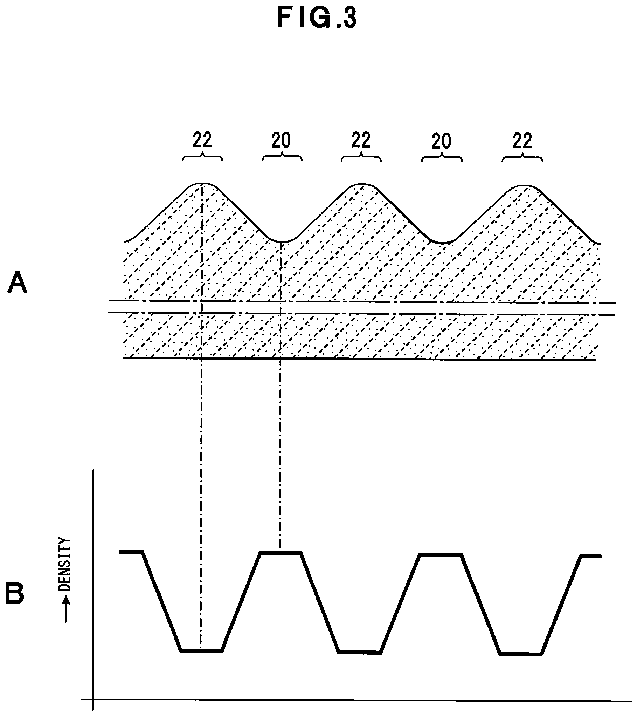

A of Fig. 3 shows an example of a cross-sectional shape of the embossed part, and B of Fig. 3 shows the density of the embossed part.

Concave parts 20 of the separators 8-1, 8-2 are regions strongly compressed by the roller during embossing, so that the separators 8-1, 8-2 are thinned by compression and the concave parts 20 pull the surrounding electrolytic paper to increase the density of the separators 8-1, 8-2 as shown in B of Fig 3.

In contrast, convex parts 22 of the separators 8-1, 8-2 allow portions of the electrolytic paper to move toward the concave parts 20 to decrease the density as shown in B of Fig. 3. Since the density of the convex parts 22 becomes lower as compared to before embossing, the insulating function of the separators 8-1, 8-2 decreases. The concave parts 20 and the convex parts 22 form higher and lower density in the separators 8-1, 8-2.

As is the case with the density, the basis weight of the separators 8-1, 8-2 rises in the concave parts 20 due to pulling-in of the electrolytic paper while decreasing in the convex parts 22. Therefore, since the basis weight of the convex parts 22 becomes lower as compared to before embossing, the insulation function of the separators 8-1, 8-2 decreases.

An insulation resistance is formed by the separator 8-1 between the anode foil 4 and the cathode foil 6. When R1, R2, and R3 denote the insulation resistance of the convex parts 22 of the embossed part 10-1, the insulation resistance of the concave parts 20, and the insulation resistance of the outer part 18 of the separator 8-1, respectively, the insulation resistance R1 of the convex parts 22, whose the density and the basis weight are low, is the smallest. The insulation resistances are in the order of R1<R3<R2. Therefore, when the overvoltage Vs exceeding the rated voltage is applied to the capacitor, a short circuit occurs at the convex parts 22 having the smallest insulation resistance. Similarly in the separator 8-2, a short circuit occurs at the convex parts 22 having the smallest insulation resistance. Therefore, since the separators 8-1, 8-2 include the low insulation parts because of the formation of the embossed parts 10-1, 10-2, the short circuit between the anode foil 4 and the cathode foil 6 can be guided to the inner part 16 of the capacitor element 2 including the embossed parts 10-1, 10-2. Since the embossed parts 10-1, 10-2 are surrounded by the outer part 18, the impact due to the short circuit is buffered by the outer part 18. In other words, the impact from the capacitor element 2 toward a case is absorbed by the outer part 18 of the capacitor element. Furthermore, since the insulation resistance R1 of the convex parts 22 is smaller than the insulation resistance R3 of the outer part 18, the short circuit occurs earlier as compared to a non-embossed capacitor element. Therefore, an increase in the movement energy can be suppressed in the capacitor element 2.

The capacitor element 2 as described above is housed in a case of a capacitor, and the case is sealed with a sealing body such as a sealing plate. In such a capacitor, the impact due to the short circuit applied to the case or the sealing plate is reduced, and the damage caused by the occurrence of the short circuit is confined in the capacitor, so that the destruction of the case and the sealing plate is avoided.

### Production Step etc. for Capacitor

This production step is an example of a production method for the capacitor of the present invention.

The production step for the capacitor includes a step of forming the anode foil 4, a step of forming the cathode foil 6, a step of forming the embossed separators 8-1, 8-2, a step of forming the capacitor element 2, a step of connecting terminals of the capacitor element 2, and a step of enclosing the capacitor element 2.

At the step of forming the anode foil 4, the anode foil 4 described above is formed from an aluminum foil, for example. As described above, an etching process is performed on the aluminum foil and a dielectric oxide film is formed on the surface thereof by a chemical conversion treatment, for example. The anode lead terminal 12 is connected to the anode foil 4.

At the step of forming the cathode foil 6, the cathode foil 6 described above is formed from an aluminum foil, for example. The cathode lead terminal 14 is connected to the cathode foil 6.

At the step of forming the embossed separators 8-1, 8-2, the embossing described above is performed on a portion or the entire area of the inner part 16 of the separator 8-1 to form the embossed part 10-1. The embossing is formed by, for example, pressing an unevenly-formed roller against the electrolytic paper at predetermined timing during the course of feeding that is a course from pulling out the electrolytic paper from a roll with the electrolytic paper to putting the electrolytic paper on the anode foil 4 and the cathode foil 6. The embossing may be performed before cutting the electrolytic paper to the size of the separator 8-1, or may be performed after the cutting. As is the case with the separator 8-1, the separator 8-2 is embossed to form the embossed part 10-2.

At the step of forming the capacitor element 2, for example, the anode foil 4 and the cathode foil 6 are stacked via the separator 8-1 and the separator 8-2 between the foils, and they are wound to form the capacitor element 2.

At the step of connecting terminals of the capacitor element 2, an anode terminal is connected to the anode lead terminal 12 of the capacitor element 2 and a cathode terminal is connected to the cathode lead terminal 14 of the capacitor element 2. It is assumed that the anode terminal and the cathode terminal are attached in advance to the sealing plate. A pressure valve may be attached to the sealing plate so as to discharge a gas generated inside the capacitor to the outside.

At the step of enclosing, the capacitor element 2 is housed in a case prepared in advance, and the case is sealed with the sealing plate. For this sealing, a curling process is performed on an opening end portion of the case to fix the sealing plate. As a result, the capacitor is completed.

### Effects of Embodiment

According to the capacitor according to this embodiment, the following effects can be acquired.
(1) Since the capacitor can prevent a short circuit in the outer part 18 of the capacitor element 2 when the overvoltage Vs exceeding the rated voltage acts between the terminals, the safety is enhanced and the reliability can be improved.
(2) When the overvoltage Vs exceeding the rated voltage is applied between the anode terminal and the cathode terminal and an overcurrent flows between the anode foil 4 and the cathode foil 6, a short-circuit position is guided to the inner part 16 of the capacitor element 2, and the impact due to the short circuit is preferentially generated in the inner part 16 of the capacitor element 2 and thereby can be buffered in the outer part 18. Consequently, the damage of the case and the sealing plate can be suppressed.
(3) The short circuit occurs at a stage of lower electricity accumulation as compared to capacitors without embossed parts 10-1, 10-2. Therefore, an amount of overcurrent flowing between the anode foil 4 and the cathode foil 6 becomes smaller, and the impact can be suppressed.
(4) Since the increase in the movement energy of the capacitor element 2 can be suppressed, the collision of the capacitor element 2 against the sealing plate and the destruction of the case and the sealing plate can be prevented, and the capacitor element 2 can be prevented from protruding out of the case.

### Other Embodiments

(1) In the embodiment, the embossed parts 10-1, 10-2 are arranged within the range of 90 % in the central portion in the height direction of the capacitor element 2 and within the range of 5 to 90 % in the diametrical direction from the center of the capacitor element 2. However, the arrangement range of the embossed parts 10-1, 10-2 is preferably further limited to the inner side of the capacitor element 2. For example, preferably, the ratio of the heights H1, H2, H3 is set to 15:70:15 so that the embossed parts 10-1, 10-2 are within the range of 70 % in the central portion in the height direction of the capacitor element 2 and, preferably, the ratio of L1, L2, L3 is set to 5:60:35 in the diametrical direction from the center of the capacitor element 2 so that the embossed parts 10-1, 10-2 are within the range of 5 to 65 % in the diametrical direction from the center of the capacitor element 2. Since the arrangement range of the embossed parts 10-1, 10-2 is further limited to the inner side of the capacitor element 2, the short-circuit position can further be guided to the inner side of the capacitor element 2.
(2) Although the embossing is performed on each of the two separators 8-1, 8-2 in the embodiment, either one of the separators may include the embossed part. Alternatively, the embossed part 10-1 of the separator 8-1 may be disposed at a position different from the embossed part 10-2 of the separator 8-2.
(3) Although the embossing is performed on one surface of each of the separators 8-1, 8-2 in the embodiment, the embossing may be performed on both surfaces . When the embossing is performed on one surface, it is not necessary to synchronize with embossing on the opposite surface side. When the embossing is performed on both surfaces, a difference between the higher and lower densities can be increased by making the concave parts formed on the respective surfaces opposite to each other and making the convex parts opposite to each other.
(4) In the embodiment, the embossing is performed on the separators 8-1, 8-2 to achieve the low insulation parts in which low-density low-basis-weight parts are formed by including the embossed parts 10-1, 10-2. However, for example, the capacitor may include fluted parts on which grooving by fluting is performed, or cut parts having the low insulation parts formed by cutting the surfaces of the separators 8-1, 8-2. The density or the basis weight of the separators 8-1, 8-2 can be lowered also by the fluted parts or the cut parts formed by cutting the surfaces, and the insulation function can be reduced.
(5) In the embodiment, the embossing is performed on the separators 8-1, 8-2 to include the low insulation parts between the anode foil 4 and the cathode foil 6. However, two or more separators may be inserted between electrodes and a through-hole may be formed in one of the separators to form a relatively lower insulation part than the surroundings.
(6) Although a plurality of the separators 8-1, 8-2 is used in the embodiment, the capacitor may have a structure in which only one separator is interposed between the anode foil 4 and the cathode foil 6.

In the embodiment, the present invention is applied to a capacitor in the form of the anode foil 4 and the cathode foil 6 wound with the separators 8-1, 8-2 interposed therebetween. However, the present invention is also applicable to a capacitor in the form of the anode foil and the cathode foil laminated with the separators interposed therebetween.

### Example 1

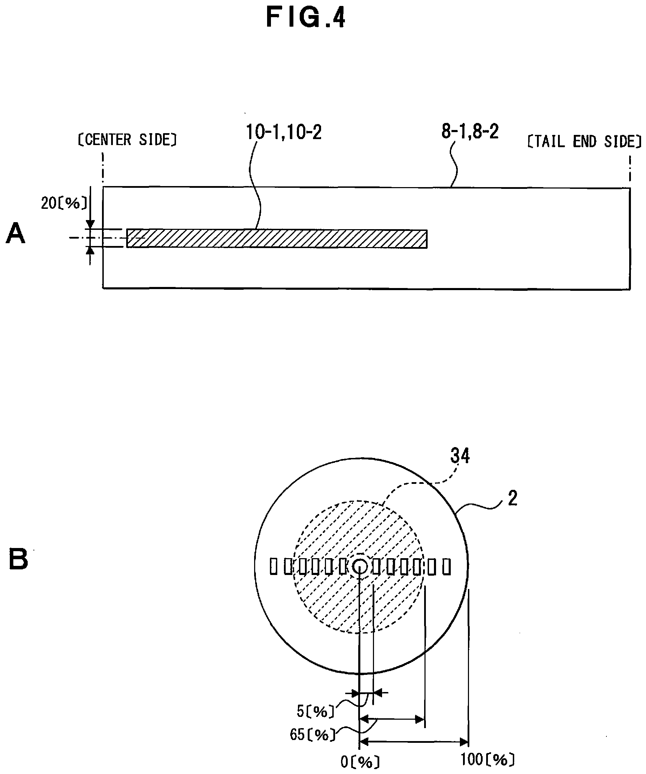

In the capacitor element 2 of the capacitor according to Example 1, the kraft fiber nonwoven fabric is used for the separators 8-1, 8-2. The separators 8-1, 8-2 include the embossed parts 10-1, 10-2 within the range of 20 [%] in the central portion as shown in A of Fig. 4 in the height direction of the capacitor element 2, and within a range indicated as a processing area 34 in a plane view of the capacitor element 2 shown in B of Fig. 4, or specifically, within the range of 5 to 65 [%] in the diametrical direction from the center of the capacitor element 2. If an overcurrent is applied to a capacitor including the capacitor element 2 as described above, the current flows through the embossed parts 10-1, 10-2 serving as the low insulation part formed inside the capacitor element 2 so that a short circuit is preferentially generated inside the capacitor element 2, and the impact due to the short circuit can be confined in the capacitor element 2 by the anode foil 4, the cathode foil 6, and the separators 8-1, 8-2 that are around the short circuit.

### Example 2

In the capacitor element 2 of the capacitor according to Example 2, the hemp fiber nonwoven fabric is used for the separators 8-1, 8-2, and the embossed parts 10-1, 10-2 are arranged at the same positions as Example 1. Even in the capacitor including the capacitor element 2 as described above, the generated overcurrent flows through the embossed parts 10-1, 10-2 so that a short circuit is preferentially generated inside the capacitor element 2 and, therefore, the impact due to the short circuit can be confined in the capacitor element 2 by the anode foil 4, the cathode foil 6, and the separators 8-1, 8-2 that are around the short circuit.

### Example 3

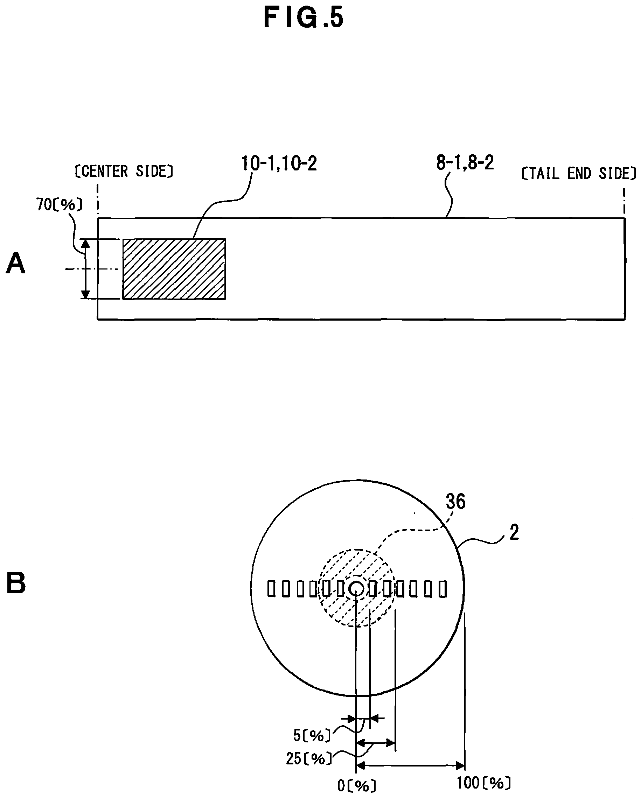

In the capacitor element 2 of the capacitor according to Example 3, the kraft fiber nonwoven fabric is used for the separators 8-1, 8-2. The separators 8-1, 8-2 include the embossed parts 10-1, 10-2 within the range of 70 [%] in the central portion as shown in A of Fig. 5 in the height direction of the capacitor element 2, and within a range indicated as a processing area 36 in a plane view of the capacitor element 2 shown in B of Fig. 5, or specifically, within the range of 5 to 25 [%], about 5 to 30 [%], in the diametrical direction from the center of the capacitor element 2. Even in the capacitor including the capacitor element 2 as described above, the generated overcurrent flows through the embossed parts 10-1, 10-2 so that a short circuit is preferentially generated inside the capacitor element 2 and, therefore, the impact due to the short circuit can be confined in the capacitor element 2 by the anode foil 4, the cathode foil 6, and the separators 8-1, 8-2 that are around the short circuit.

### Example 4

In the capacitor element 2 of the capacitor according to Example 4, the hemp fiber nonwoven fabric is used for the separators 8-1, 8-2, and the embossed parts 10-1, 10-2 are arranged at the same positions as Example 3. Even with such a configuration, the same effects as the first to third embodiments can be acquired.

### Example 5

### Production Process of Capacitor

An example of a production process of a capacitor including processing of separators will be described.

In the production process of the capacitor element 2 described in this example, the processing of the embossed part 10-1 is performed in advance at a predetermined position on electrolytic paper used as the separator 8-1. This processing is performed by, for example, pressing a jig for embossing against a surface portion of the electrolytic paper etc. used as the separator. The embossed separator is stored in a rolled state until production of the capacitor element 2, for example.

The embossed part 10-1 having predetermined width XH and length is formed in the inner part 16 of the flat surface portion of the separator. For example, if the embossed parts 10-1 having a predetermined length are intermittently formed along a foil longitudinal direction of the anode foil 4 and the cathode foil 6, the length of one of the intermittently formed embossed parts 10-1 is the length L2 used in the one capacitor element 2. The length between the embossed parts 10-1 is the sum of the length L1 of the outer part 18 on the center side and the length L3 of the outer part 18 of the tail end portion. This makes it possible to supply the separator in the rolled state continuously to a winding position, so that the capacitor elements 2 can continuously and efficiently be produced.

In a winding process of the capacitor element 2, the anode foil 4, the embossed separator 8-1, the cathode foil 6, and the separator 8-2 are wound in a laminated state.

Although the case of the separator 8-2 without the embossed part has been described, this is not a limitation. The embossed part 10-2 may be formed on a flat surface portion of the separator 8-2.

With such a configuration, the formation position of the embossed part 10-1 for the separator 8-1 can be confirmed in advance and, therefore, the capacitor element 2 can be enhanced in quality and accuracy.

### Example 6

In this embodiment, a formation process of the embossed part 10-1 is performed on the separator 8-1 simultaneously with the winding process of the capacitor element 2. A winding device of the capacitor element 2 includes, for example, a roller-shaped jig on an arrangement path of the separator 8-1. This jig contacts the separator 8-1 continuously or at an arbitrary timing during execution of the winding process of the capacitor element 2 so as to form the embossed part 10-1. Depending on the contact timing of this jig, the number and the length of the formed embossed parts 10-1 are determined.

The width of the embossed part 10-1 with respect to the surface of the separator 8-1 is determined by the width of the jig and the position of contact with the surface of the separator 8-1.

With such a configuration, since the winding process and the embossing can be performed at the same time, an increase in work procedures can be prevented and the production process can be speeded up.

### Example 7

This embodiment represents the case of forming a single separator by combining a plurality of separators. As a result, the embossed part 10-1 can be arranged at an arbitrary position.

In the production process of the capacitor element 2, first, the band-shaped embossed part 10-1 is formed in the longitudinal direction at a predetermined height position of the separator 8-1. This separator 8-1 is an example of a first separator of the present disclosure. The processing of the embossed part 10-1 is performed in the same way as the method described in Example 5. In the production method for the capacitor described in this example, the arrangement position of the low insulation part of the separator 8 to the planes of the anode foil 4 and the cathode foil 6 is set in the winding process of the capacitor element 2 and, then the separator 8-1 may form the position of the embossed part 10-1 from the tail end portion side of the electrolytic paper.

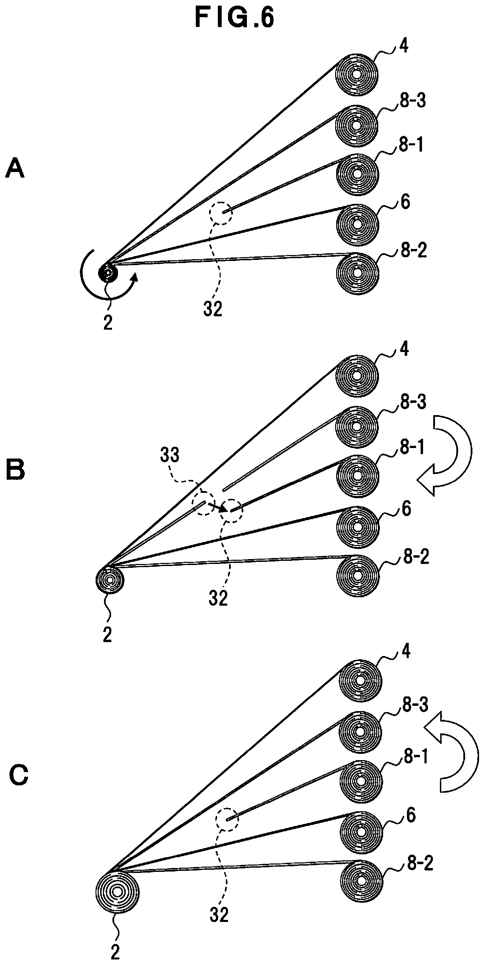

In the winding process of the capacitor element 2, for example, as shown in Fig. 6, the anode foil 4, a separator 8-3 without an embossed part, the separator 8-1 provided with the embossed part 10-1, the cathode foil 6, and the separator 8-2 are disposed for a winding device of the capacitor element 2. The separator 8-3 is an example of the first separator of the present disclosure, and the first separator has a planar or near-planar surface facing a foil surface of the anode foil 4 or the cathode foil 6. This separator 8-3 is combined with the separator 8-1 to form a single separator.

In the winding process device, the separator 8-1 and the separator 8-3 are desirably arranged at adjacent or close positions. The separators 8-1, 8-3 may be brought close to each other at the connection position on the arrangement path of the separators.

At the production step of the capacitor element 2, for example, as shown in A of Fig. 6, the anode foil 4, the separator 8-3, the cathode foil 6, and the separator 8-2 are connected to a winding portion of a production device. In this state, an end portion 32 of the separator 8-1 is kept on a predetermined arrangement path by a cutting means not shown or a supporting means of a separator.

The capacitor element 2 is wound with the separator 8-3 from the start of winding until a predetermined timing, for example. In the winding process of the capacitor element 2, for example, as shown in B of Fig. 6, the separator 8-3 is cut at the predetermined timing. The end portion 32 of the separator 8-1 is then connected to an end portion 33 of the separator 8-3 on the side of the wound capacitor element 2 so that they are continuously arranged. By winding the separator 8-1 from this state, the embossed part 10-1 serving as the low insulation part is formed in the capacitor element 2. The separator 8-1 and the separator 8-3 are connected by using an adhesive material such as an adhesive tape, for example. With regard to "continuously" in this case, the separator 8-1 and the separator 8-2 may or may not overlap with each other as long as the separators are arranged continuously without intermission. Obviously, this is performed under the condition without occurrence of short circuit.

When the connection of the separator 8-1 is completed, the winding of the capacitor element 2 is resumed, and the winding process is executed until the next set timing.

At the predetermined timing, the separator 8-1 is cut. The end portion 33 of the separator 8-3 is then connected to the end portion 32 of the separator 8-1 on the side of the wound capacitor element 2, and the winding process is resumed as shown in C of Fig. 6. This connection is achieved by using the adhesive tape etc. as described above.

In the winding process of the capacitor element 2, for example, when the winding process approaches the end based on the set winding length of the anode foil 4 and the cathode foil 6, the separator 8-3 without the embossed part are wound. In this way, the embossed part is prevented from being disposed on the tail end side of the separator, i.e., on the outer circumferential side of the capacitor element 2. The order of switching of the separators 8-1, 8-3 is not limited to the case described above. To form the embossed part 10-1 on the winding core side of the capacitor element 2, the separator 8-1 may be wound first and then switched to the separator 8-3.

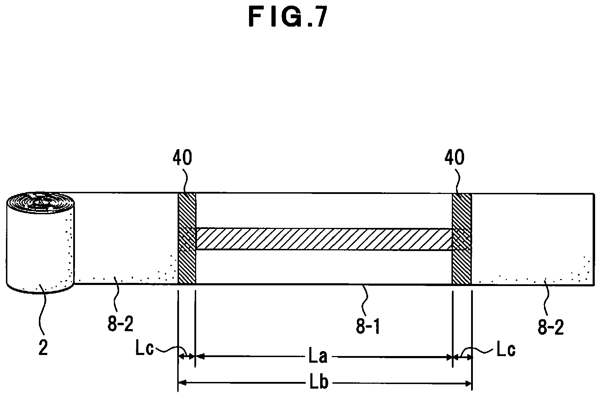

By alternately combining the two types of the separators 8-1, 8-3, as shown in Fig. 7, the capacitor element 2 can be formed with the embossed part 10-1 arranged at an arbitrary position. In the connection between the end portion 32 of the separator 8-1 and the end portion 33 of the separator 8-3, for example, overlapping parts 40 are provided between the separators by ensuring a length Lb of the separator 8-1 longer than an arrangement length La of the embossed part 10-1. Each overlapping part 40 is a connecting portion between the separator 8-1 and the separator 8-3, and is an example of a connecting part of the present disclosure. The length Lc of the overlapping part 40 may arbitrarily be set, and may be set in accordance with the size of the capacitor element 2, the magnitude of tension during the processing, or the usage environment, capacity, and withstand voltage of the capacitor, for example.

For connection between the separator 8-1 and the separator 8-3, for example, an adhesive material such as an adhesive tape is affixed to cover the overlapping part 40. The adhesive tape is a tape made of a material such as polyphenylene sulfide (PPS) or polypropylene (PP), for example. For the adhesive material, a material other than a tape may be used. In this case, the type of the adhesive material is selected in consideration of the influence on an electrolytic solution used for the capacitor.

Such a configuration can be achieved by adding a separator arrangement line to an existing winding device of a capacitor element and is therefore highly convenient. Since the length of formation of the embossed part 10-1 can arbitrarily be set, the production device can deal with production of various types of capacitors. Since the connection strength can be maintained by providing the overlapping part 40 between the separators, breakage etc. can be prevented from occurring in a portion other than the embossed part.

### Overvoltage Application Experiment

By using the kraft fiber nonwoven fabric or the hemp fiber nonwoven fabric for the separators 8-1, 8-2, capacitors having various embossing positions are prepared for performing an overvoltage application experiment of each of the capacitors. For the experiments, the capacitors of Examples 1 to 4 described above and capacitors of Comparative Examples 1 to 3 described below are used.

### Comparative Example 1

In Comparative Example 1, a capacitor is formed without embossing on any of the separators 8-1, 8-2.

### Comparative Example 2

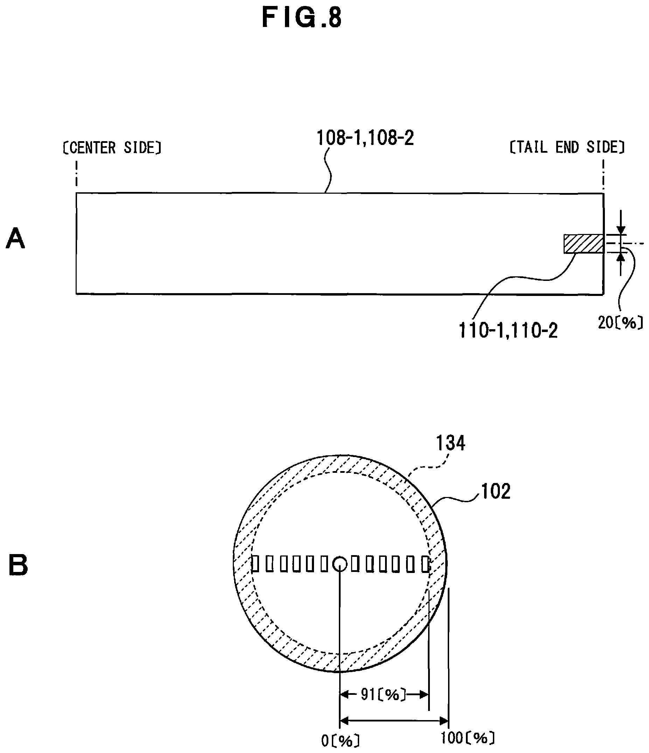

In a capacitor element 102 of the capacitor according to Comparative Example 2, the kraft fiber nonwoven fabric is used as separators 108-1, 108-2. The separators 108-1, 108-2 include embossed parts 110-1, 110-2 within the range of 20 [%] in the central portion as shown in A of Fig. 8 in the height direction of the capacitor element 102, and within a range indicated as a processing area 134 in a plane view of the capacitor element 102 shown in B of Fig. 8, or specifically, within the range of 91 to 100 [%] in the diametrical direction from the center of the capacitor element 102.

### Comparative Example 3

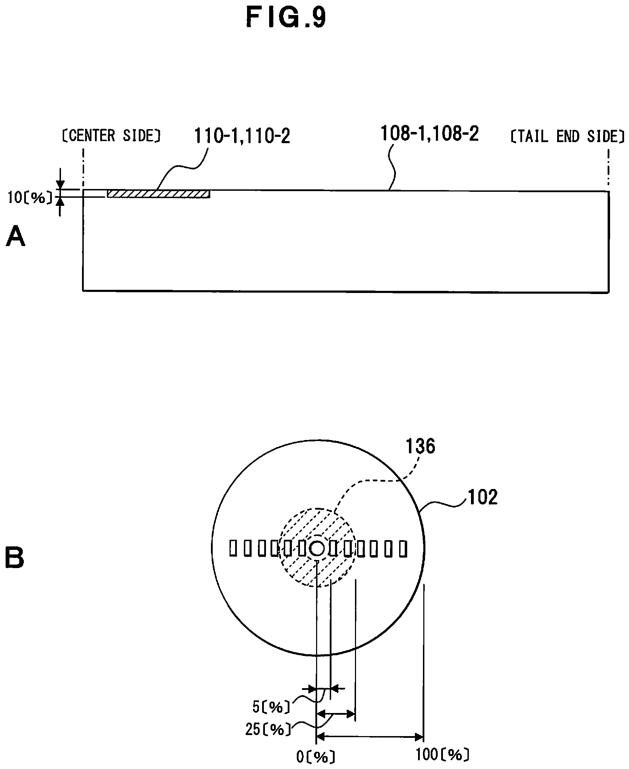

In the capacitor element 102 of the capacitor according to Comparative Example 3, the kraft fiber nonwoven fabric is used as the separators 108-1, 108-2. The separators 108-1, 108-2 include the embossed parts 110-1, 110-2 within the range of 10 [%] in the upper portion as shown in A of Fig. 9 in the height direction of the capacitor element 102, and within a range indicated as a processing area 136 in a plane view of the capacitor element 102 shown in B of Fig. 9, or specifically, in the separators 108-1, 108-2 within the range of 5 to 25 [%] in the diametrical direction from the center of the capacitor element 102.

### Comparative Example 4

In the capacitor element 102 of the capacitor according to Comparative Example 4, the kraft fiber nonwoven fabric is used as the separators 108-1, 108-2. The separators 108-1, 108-2 include the embossed parts 110-1, 110-2 within the range of 20 [%] in the central portion in the height direction of the capacitor element, and within the range of 0 to 4 [%] in the diametrical direction from the center of the capacitor element 102.

### Specifications of Capacitors Used for Experiments

The capacitors of Examples 1 to 4 and the capacitors of Comparative Examples 1 to 4 are used for the experiments. These capacitors have the following specifications:
Rated voltage: 400 [V];
Electrostatic capacity: 5600 [µF];
Dimensions: (Diameter Φ) 76.2 [mm], (Length L) 130 [mm]; and
Other: a pressure valve is disposed on a sealing plate.

### Experimental Method

An overvoltage of 780 [V] is applied to each of the capacitors to cause a short circuit between the anode foil 4 and the cathode foil 6, and the operation of the pressure valve and the damage of at least one of the case or the sealing plate are evaluated.

### Experimental Result

The pressure valve operated in all the capacitors of Examples 1 to 4; however, no damage was confirmed in the case or the sealing plate. In all the capacitor elements 2, the short circuit occurred in the embossed parts 10-1, 10-2.

In the capacitors of Comparative Example 1, four capacitors out of the five tested capacitors were damaged in the case or the sealing plate. The occurrence locations of the short circuits were not limited to a certain range and were different depending on the capacitor elements 102.

In the capacitors of Comparative Example 2, the short circuits occurred in the outer circumferential portions of the capacitor elements 102. Because of the absence of the outer parts of the capacitor elements 102 absorbing the impacts due to the short circuits, the impacts reached toward the cases, and damage of the cases or the sealing plates of all the capacitors got damaged.

In the capacitors of Comparative Example 3, the short circuits occurred in the upper end portions of the capacitor elements 102. Because of the absence of the outer parts of the capacitor elements 102 absorbing the impacts due to the short circuits, the impacts reached toward the cases and the sealing plates, and the cases or the sealing plates of all the capacitors got damaged.

In the capacitors of Comparative Example 4, the short circuits occurred on the center sides of the capacitor elements 102. Center portions of the capacitor elements 102 have spaces formed by pulling out a winding shaft used for winding the capacitor elements 102. Since the short circuits occurred near these spaces, the impacts due to the short circuits reached through the spaces in the center portions of the capacitor elements 102 toward the sealing plates and the bottom surfaces of the cases, and the cases or the sealing plates of the capacitors got damaged.

The evaluation results are as described in Table 1 below.

**[Table 1]**

| | valve operation | incidence rate of damage in at least one of exterior case or sealing plate |
|---|---|---|
| Example 1 | 100 [%] | 0 [%] |
| Example 2 | 100 [%] | 0 [%] |
| Example 3 | 100 [%] | 0 [%] |
| Example 4 | 100 [%] | 0 [%] |
| Comparative Example 1 | 100 [%] | 80 [%] break down: exterior case damage 50 [%] sealing plate damage 50 [%] |
| Comparative Example 2 | 100 [%] | 100 [%] break down: exterior case damage 100 [%] |
| Comparative Example 3 | 100 [%] | 100 [%] break down: exterior case damage 60 [%] sealing plate damage 40 [%] |
| Comparative Example 4 | 100 [%] | 80 [%] break down: exterior case damage 50 [%] sealing plate damage 50 [%] |

In the embodiments, Examples, and Comparative Examples described above, the kraft fiber nonwoven fabric or the hemp fiber nonwoven fabric is used as the separators 8-1, 8-2. However, the present invention is not limited thereto, and the separators may be those mainly made of natural fibers such as Manila paper and cellulose paper, those mainly made of synthetic fibers, or those mainly made of fibers of glass, synthetic polymer, etc.

### Other Embodiments

Although the adhesive material such as the adhesive tape is used for connecting the separator 8-1 and the separator 8-3 in the example described above, the present invention is not limited thereto. The separator 8-1 and the separator 8-2 may continuously be arranged by a technique such as ultrasonic connection and cold welding without using an adhesive such as an adhesive tape.

As described above, the preferable embodiments etc. of the present invention have been described. However, the present invention is not limited to the above description and can obviously variously be modified and altered by those skilled in the art based on the gist of the invention described in claims or disclosed in the description, and it is needless to say that these modifications and alterations fall within the scope of the present invention.

### INDUSTRIAL APPLICABILITY

According to the capacitor and the production method therefor of the present invention, the low insulation part having the reduced insulation function between the anode foil and the cathode foil is included inside the capacitor element, and an overcurrent flowing between the anode foil and the cathode foil can be made to flow through the low insulation part. Since a short circuit can be caused in the low insulation part at a stage of lower electricity accumulation as compared to a capacitor without this low insulation part, the impact due to overcurrent is smaller, and the anode foil, the cathode foil, and the separator around the low insulation part can confine the impact due to the short circuit within the capacitor element. Since the damage of the case and the sealing member can be reduced or avoided, the reliability of the capacitor can be enhanced.

### EXPLANATIONS OF LETTERS OR NUMERALS

- 2: capacitor element
- 4: anode foil
- 6: cathode foil
- 8-1, 8-2: separator
- 10-1, 10-2: embossed part
- 12: anode lead terminal
- 14: cathode lead terminal
- 16: inner part
- 18: outer part
- 20: concave part
- 22: convex part
- 30: jig
- 32, 33: end portion
- 40: overlapping part

## Claims

1. A capacitor using a capacitor element having an anode foil and a cathode foil wound with a separator interposed between the anode foil and the cathode foil, wherein
the separator includes a low insulation part having a low insulation function between the anode foil and the cathode foil, and wherein
the low insulation part is included within a range of 90 % in a central portion in a height direction of the capacitor element and within a range of 5 to 90 % in a diametrical direction from the center of the capacitor element.

2. The capacitor according to claim 1, wherein
the separator includes:
a first separator insulating the anode foil and the cathode foil from each other along a foil longitudinal direction, and
a second separator including the low insulation part, and wherein
the first separator and the second separator are continuously arranged along the foil longitudinal direction.

3. The capacitor according to claim 1 or 2, wherein the low insulation part has the low insulation function due to the separator of which density or basis weight is low.

4. The capacitor according to claims 1 to 3, wherein the separator includes the low insulation part in which an embossed part, a fluted part, or a cut part is formed.

5. A production method for a capacitor comprising the steps of:
forming an anode foil;
forming a cathode foil;
forming a low insulation part having a low insulation function in a separator, the low insulation part being between the anode foil and the cathode foil; and
stacking the anode foil and the cathode foil via the separator, and forming a capacitor element by winding, wherein
the low insulation part is included within a range of 90 % in a central portion in a height direction of the capacitor element and within a range of 5 to 90 % in a diametrical direction from the center of the capacitor element.

6. The production method for a capacitor according to claim 5, wherein
the method includes a process of forming a first separator insulating the anode foil and the cathode foil from each other and a second separator including a low insulation part having a low insulation function between the anode foil and the cathode foil, and
continuously arranging the first separator and the second separator along a foil longitudinal direction.
